# EUROPEAN PATENT SPECIFICATION

(11) **EP 2 149 405 B1**
(45) Date of publication and mention of the grant of the patent: **14.12.2011**
(21) Application number: 08425517.3
(22) Date of filing: 28.07.2008
(51) Int. Cl.: B08B 15/02, B01D 46/00, B01D 46/10, F24F 13/28

(54) **Hood of an air conditioning plant for clean rooms comprising means for connecting the cover and the filter**
Haube einer Luftkonditionierungseinrichtung für Reinräume mit Verbindungselement für Deckel und Filter
Hotte d'une installation de conditionnement pour des salles blanches comprenant un moyen pour connecter le couvercle et le filtre

(43) Date of publication of application: 03.02.2010
(73) Proprietor: FCR S.p.A., 20092 Cinisello Balsamo (MI) (IT)
(72) Inventor: Cighetti, Andrea, 20092 Cinisello Balsamo (MI) (IT); Nespola, Alfredo, 20092 Cinisello Balsamo (MI) (IT)
(74) Representative: Ferraiolo, Ruggero

(56) References cited:
- US-A- 4 592 784
- US-A- 4 883 511
- US-A- 4 946 484
- US-A- 6 117 202
- US-A1- 2005 268 585

## Description

01. This invention concerns means for connecting the cover with the filter in a hood of a conditioning plant for clean rooms.

02. The field of the invention is that of the filters for conditioned air, in particular the field of the absolute filters, namely the ones that let pass into the room to be conditioned the air only which has been treated by a conditioning plant and stop the undesired particles contained therein.

03. Hood is conventionally the assembly of the cover and filter. The hood is a box, generally placed under a clean room ceiling, wherein the conditioned air supplied from a duct loses velocity and pressure for passing into the clean room through a conventional filter which generally is an absolute filter.

04. Clean rooms are those rooms used for surgical operations, for special analysis laboratories, for handling electronic material, in general are the environments at controlled contamination.

05. Absolute filter/s will be simply referred to as filter/s in the following description and claims.

06. The connection of the cover with the filter shall be dust proof in order to prevent the supplied air from jumping the filter and passing into the clean room together with undesired particles. Nevertheless, the cover must be such that one can remove it any time the filter requires to be replaced or a maintenance operation is necessary, so that, as it is not possible to weld the cover to the filter, according to the state of the art the cover is fixed to the filter by means of a suitable glue which fastens its peripheral edge to the peripheral edge of the filter. In such a way, the cover may be removed from the filter by overcoming the glue resistance, but with the drawback that the cover deforms and can not be reused.
Document US 6 117 202 A is known that indeed discloses a device close to the present application. It shows a seal fluid gasket similar with the present application and mechanical fastener means (36, 38) located in a lower position in the unit such as to work through an outwardly projecting flange that rests on a T frame that holds the device fixed, generally, to the room ceiling. The lower position of the mechanical fasteners and the outwardly projecting flange make the main differences with the mechanical locking devices in the present application.
Other documents are known that may be considered as background in this present technical field: US 2005/0268585 A1 discloses a hood according to the preamble of claim 1 presenting a seal fluid gasket similar to the one in the application, but different in the coupling of the parts embodying the gasket.

07. The connection means in the hood according to the present invention, although they obviate said drawback and assure dustproof between the cover and the filter, comprise a reciprocal engagement of the filter peripheral edge with the cover peripheral edge defined by:
- one of said edges provided with a hollow extended all along its periphery, a seal fluid gasket spread into the hollow and the other edge extended into the hollow and plunged into the seal fluid gasket;
- retaining means adapted to keep the cover and the filter in said reciprocal engagement.

08. The seal fluid gasket is a bed of material that does not harden and dry and permanently sticks to the hollow inner surface at least all along the life of the filter. The seal fluid gasket which presents such features may be, for instance, a dielectric-silicon gel like the one made by Dow Corning known under the commercial name Sylgard ^{®}517.

09. The retaining means are in the number of at least four equally spaced and comprise a vertical socket head screw integral with a transversal bar that can extend below the hollow.

10. The main advantage of this invention is permitting the cover to be removed without being damaged and, so, reusing the cover after replacing the used filter by a fresh one. Such an advantage means lowering the maintenance costs for the conditioning plant due to the reusing of the cover and to the velocity in removing the cover and the used filter and in mounting a fresh filter. This advantage is achieved by the hood in accordance with claim 1.

11. It is realized that, on reinstalling a fresh filter, said hollow shall be provided with a fresh seal fluid gasket.

12. The invention is explained in detail here below by an example and the aid of drawings wherein
- Fig. 1 is a vertical section and
- Fig. 2 is a partly sectioned view of a detail.

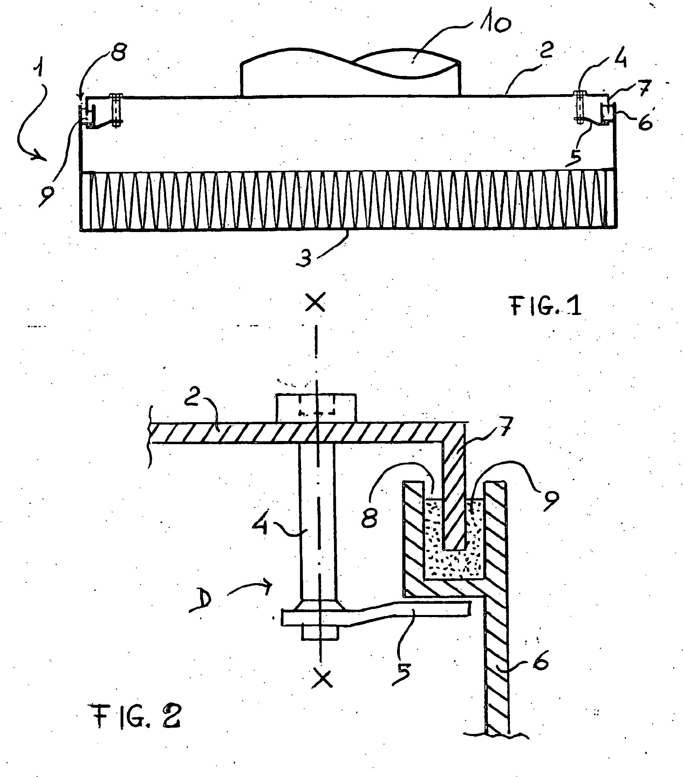

Fig. 1 shows the hood 1 placed adjacent to a clean room ceiling that is not shown in the figure. Hood 1 comprises the cover 2, the absolute filter 3 and the retaining means 4, 5 which keep the edge 6 of the absolute filter and the edge 7 of the cover in the reciprocal engagement position where the edge 7 extends into the hollow 8 of the edge 6 and into the gel bed 9 spread into the hollow. The flexible duct 10 which supplies the conditioned air to the hood 1 is visible between the room ceiling (not shown) and the hood 1. The air pressure in the hood is so low that has no effect on the gel into the hollow 8.
Fig. 2 shows the retaining means in detail. Whereas the cover edge 7 extends into the hollow 8 and the gel bed 9, the position of the reciprocal engagement between the peripheral edge 6 of filter 3 and the peripheral edge 7 of cover 2 is assured by device D comprising the vertical pin 4 rotatable in a hole of cover 2 and the horizontal bar 5 that may be positioned to support the lower wall of hollow 8. The top of vertical pin 4 bears a socket head usable to impart a rotation about the axis X-X by a suitable tool and the bar 5 is welded at the bottom end of pin 4. The figure shows device D in the engagement position and it may be realized that an appropriate rotation of pin 4 causes the filter 3 to disengage from the cover 2 that then may be vertically lifted by compressing the flexible duct 10, which allows the filter 3 to be removed.

## Claims

1. Hood (1) of a conditioning plant for clean rooms, the hood(1) comprising a cover (2), a filter (3) and means for connecting the cover (2) with the filter (3) which comprise a reciprocal engagement of the filter peripheral edge (6) with the cover peripheral edge (7) defined by one of said edges provided with a hollow (8) extended all along its periphery, a seal fluid gasket (9) spread into the hollow and the other edge extended into the hollow (8) and plunged into the seal fluid gasket (9), retaining means (4, 5) able to keep the cover (2) and the filter (3) in said reciprocal engagement in which the retaining means comprise a vertical pin (4) with a transversal bar (5) extending below the hollow, positioned adjacent to the connection between the two edges (6,7) to support the lower wall of the hollow (8) once the vertical pin (4) has been rotated on purpose and may be rotated enough to release the hollow (8) when the cover (2) has to be removed **characterized in that**: there are at least four retaining means (4, 5) equally spaced in which the vertical pins are socket head screws (4), integral with a transversal bar and rotatable in a hole of cover (2) for extending into the hood (1).

2. Hood according to claim 1 **characterized in that** the seal fluid gasket (9) is a bed of fluid material that does not harden and dry permanently adhering to the surface of the hollow (8) at least all along the life of the filter.

3. Hood according to claims 1, 2 **characterized in that** the seal fluid gasket (9) is a gel.

## Patentansprüche

1. Haube (1) für eine Konditionierungsanlage für Reinräume, wobei die Haube (1) eine Abdeckung (2), ein Filter (3) und Mittel zum Verbinden der Haube (2) mit dem Filter (3) aufweist, mit einem gegenseitigen Eingriff der Filterumfangskante (6) mit der Abdeckungsumfangskante (7), die durch eine der Kanten definiert ist, die mit einem Hohlraum (8) versehen ist, der sich entlang ihres Umfangs erstreckt, einer Dichtungsfluiddichtung (9), die sich in den Hohlraum erstreckt, wobei sich die andere Kante in den Hohlraum (8) erstreckt und in die Dichtungsfluiddichtung (9) eintaucht, Haltemittel (4, 5), die in der Lage sind, die Abdeckung (2) und den Filter (3) in dem gegenseitigen Eingriff zu halten, wobei die Haltemittel einen vertikalen Stift (4) mit einem Querstab (5) aufweisen, der sich unterhalb des Hohlraumes erstreckt, der angrenzend an die Verbindung zwischen den beiden Kanten (6, 7) angeordnet ist, um die untere Wandung des Hohlraums (8) zu stützen, sobald der vertikale Stift (4) mit Absicht gedreht wird und genug gedreht werden kann, um den Hohlraum (8) zu lösen, wenn die Abdeckung (2) entfernt wird, **dadurch gekennzeichnet, dass**:
zumindest vier gleich beabstandete Haltemittel (4, 5) vorgesehen sind, in denen die vertikalen Stifte Zylinderschrauben (4) sind, die integral mit einem Querstab sind und in einem Loch der Abdeckung (2) zur Erstreckung in die Haube (1) drehbar sind.

2. Haube nach Anspruch 1, **dadurch gekennzeichnet, dass** die Dichtungsfluiddichtung (9) ein Bett aus Fluidmaterial ist, das nicht aushärtet und trocknet, permanent an der Oberfläche des Hohlraums (8) zumindest für die gesamte Lebensdauer des Filters anhaftet.

3. Haube nach Anspruch 1, 2, **dadurch gekennzeichnet, dass** die Dichtungsfluiddichtung (9) ein Gel ist.

## Revendications

1. Hotte (1) pour une installation de conditionnement de salles blanches, la hotte (1) comportant un couvercle (2), un filtre (3) et des moyens pour relier le couvercle (2) au filtre (3) de la hotte (1) d'une installation de conditionnement pour des salles blanches, comportant :
- un engagement réciproque du bord périphérique (6) du filtre avec le bord périphérique (7) du couvercle, ce moyen étant formé par l'un des bords muni d'une partie creuse (8) s'étendant le long de sa périphérie, d'un joint d'étanchéité fluide (9) venant dans la partie creuse et l'autre bord venant dans la partie creuse (8) et plongeant dans le joint d'étanchéité fluide (9) des moyens de retenue (4, 5) pour tenir le couvercle (2) et le filtre (3) s'engageant réciproquement,
- le moyen de retenue comporte une broche verticale (4) avec une barre transversale (5) venant sous la partie en creux, positionnée au voisinage de la connexion entre les deux bords (6, 7), pour tenir la paroi inférieure de la partie en creux (8) dès que la broche verticale (4) a été tournée par actionnement et qui peut être tournée suffisamment pour dégager la partie creuse (8) pour permettre d'enlever le couvercle (2),
hotte **caractérisée par**
au moins quatre moyens de retenue (4, 5) répartis de manière égale et dans lesquels les broches verticales sont des vis à tête et douille (4) faisant corps avec une barre transversale et qui peuvent tourner dans un trou du couvercle (2) pour venir dans la hotte (1).

2. Hotte selon la revendication 1,
**caractérisée en ce que**
le joint d'étanchéité fluide (9) est un lit de matière fluide qui ne durcit pas et qui adhère en permanence à la surface de la partie creuse (8) au moins pendant toute la durée de vie du filtre.

3. Hotte selon les revendications 1 et 2,
**caractérisée en ce que**
le joint d'étanchéité fluide (9) est un gel.
